# EUROPÄISCHE PATENTANMELDUNG

(11) **EP 0 787 635 A2**
(43) Veröffentlichungstag der Anmeldung: **06.08.1997**
(21) Anmeldenummer: 96115195.8
(22) Anmeldetag: 21.09.1996
(51) Int. Cl.: B60T 1/06, F16D 65/12

(54) **Antriebsstrang mit einem Motor, einem Getriebe, einer Kupplung und einer Bremse**

(30) Priorität: 28.09.1995 DE 19536093
(71) Anmelder: Voith Turbo GmbH & Co. KG, 89522 Heidenheim (DE)
(72) Erfinder: Vogelsang, Klaus, 74564 Crailsheim (DE)
(74) Vertreter: Weitzel, Wolfgang, Dr.-Ing. Patentanwalt

(57) **Zusammenfassung**

Die Erfindung betrifft einen Antriebsstrang
mit einem Motor (M);
mit einem Getriebe (G);
mit einer Kupplung, die zwei Kupplungsscheiben (3,4) aufweist, deren eine mit der Motorwelle und deren andere mit der Getriebewelle drehfest verbunden ist;
in unmittelbarer Nähe der Kupplung ist eine Bremsscheibe angeordnet;
die eine der beiden Kupplungsscheiben ist aus der Bremsscheibe (3) gebildet.

## Beschreibung

Die Erfindung betrifft einen Antriebsstrang gemäß dem Oberbegriff von Anspruch 1.

Antriebsstränge dieser Art sind in großer Zahl bekanntgeworden. Nur beispielshalber wird auf DE 195 01 853.2 verwiesen.

Für solche Antriebsstränge gibt es Bremssysteme der unterschiedlichsten Art. Ein wichtiger Typus eines Bremssystems ist in US 5 358 077 beschrieben. Dieses Bremssystem umfaßt eine Bremsscheibe, die von einer Nabe getragen ist. Die Nabe weist einen Kanal zum Zuführen und einen Kanal zum Abführen eines Kühlmittels auf. Die Bremsscheibe ist mit einer Vielzahl von radial angeordneten Ausnehmungen versehen, den sogenannten Kühlzellen. In jeder Kühlzelle befindet sich ein Röhrchen, das sich gleich der Kühlzelle in radialer Richtung erstreckt. Die einzelnen Röhrchen sind mit ihren radial inneren Enden an den Zufuhrkanal angeschlossen, während sie mit ihrem radial äußeren Bereich mit der Kühlzelle in leitender Verbindung stehen. Die Kühlzellen wiederum sind mit ihren radial inneren Bereichen an den Abfuhrkanal angeschlossen. Der Zufuhrkanal der Nabe wird mit Kühlmittel beschickt. Dieses tritt in die radial inneren Enden der Röhrchen ein, strömt sodann durch Zentrifugalkraft radial nach außen, mündet dort in die betreffenden Kühlzellen und fließt in den Kühlzellen wieder radial einwärts zurück, um zum Abfuhrkanal in der Nabe zu gelangen.

Gerade bei Antriebssträngen, die eine hohe Leistung übertragen müssen, ist es wichtig, ein effizientes Bremssystem zu verwenden, das hohe, beim Bremsen anfallende Wärmemengen abfuhren kann, und das demgemäß eine hohe Bremsleistung entwickeln kann. Dieses Erfordernis ist besonders dann wichtig, wenn es sich um ein Bremssystem für ein Kraftfahrzeug handelt, insbesondere für ein Nutzfahrzeug von hohem Transportgewicht.

Die Anordnung derartiger flüssigkeitsgekühlter Bremssysteme im Antriebsstrang ist jedoch problematisch, und zwar schon im Hinblick auf die Zufuhr und Abfuhr des flüssigen Kühlmittels.

Der Erfindung liegt die Aufgabe zugrunde, einen Antriebsstrang gemäß dem Oberbegriff von Anspruch 1 zu schaffen, bei dem die einzelnen Bauteile in optimaler Weise einander zugeordnet sind. Insbesondere sollen der Bauaufwand verringert, der Raumbedarf verkleinert und die Zugänglichkeit verbessert werden.

Diese Aufgabe wird durch die kennzeichnenden Merkmale von Anspruch 1 gelöst.

Die Erfindung ist anhand der Zeichnung näher erläutert.

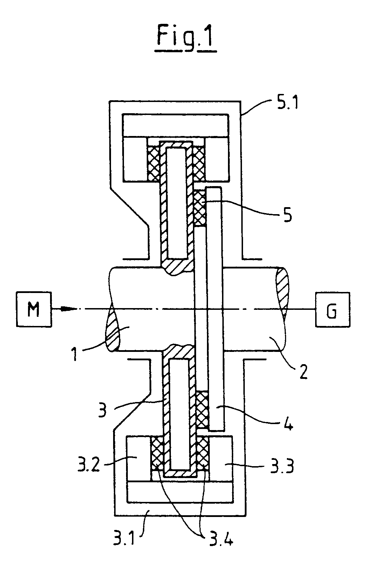

Figur 1 zeigt in schematischer Darstellung einen Ausschnitt aus einem Antriebsstrang, und zwar im hier entscheidenden Bereich der Bremse. Man erkennt einen schematisch dargestellten Motor M links der Figur, ein schematisch dargestelltes Getriebe G rechts der Figur, mit zugehörenden Wellenstümpfen 1, 2. Auf Motor-Wellenstumpf 1 ist drehfest eine flüssigkeitsgekühlte Scheibenbremse 3 aufgekeilt, während auf Wellenstumpf 2 eine Druckplatte 4 drehfest befestigt ist. Zwischen Bremsscheibe 3 befindet sich ein ringförmiger Reibbelag 5. Dieser kann entweder mit der Druckplatte 4 oder mit der Bremsscheibe 3 fest verbunden sein. Druckplatte 4 und Bremsscheibe 3 sind in axialer Richtung relativ zueinander beweglich; das bedeutet, daß eines dieser beiden genannten Elemente ortsfest sein kann, während das andere axial beweglich ist. Am besten sind Motor-Wellenstumpf 1 mit der darauf befindlichen Bremsscheibe 3 axial ortsfest, während Druckplatte 4 in axialer Richtung verschiebbar ist.

Der Bremsscheibe 3 ist ein Bremssattel 3.1 zugeordnet. Bremssattel 3.1 umfaßt die Bremsscheibe 3 auf deren Außenumfang. Zwischen dem Bremssattel 3.1 und dem Außenumfang der Bremsscheibe 3 befinden sich beidseits Bremsbeläge 3.4. Diese können ringförmig sein oder nur aus Segmenten bestehen, die den Umfang der Bremsscheibe 3 umgeben. Wie man sieht, ist der Bremssattel 3.1 im Querschnitt U-förmig. Die beiden Schenkel 3.2, 3.3 führen zum Zwecke des Bremsens eine Zangenbewegung aus, so daß eine Bremskraft auf die Bremsscheibe 3 übertragen wird.

Bremsscheibe 3 ist im Falle der Darstellung von Figur 1 gleichzeitig als Schwungrad ausgebildet und hat eine dementsprechend große Masse. Sie ist im Falle von Figur 1 hohl mit entsprechenden Führungsrippen zum Führen der Kühlflüssigkeit radial von innen nach außen und wiederum zurück von außen nach innen. Die Führungskanäle sowie die Anschlüsse zum Zuführen und zum Abführen der Kühlflüssigkeit - im allgemeinen Wasser - sind hier nicht näher dargestellt.

Die genannten Elemente bilden zusammen mit einem Kupplungsgehäuse 5.1 eine Brems-Kupplungs-Einheit.

Die Anordnung, so wie hier dargestellt, ist insofern günstig, als die Bremse hierbei als Motor-Schwungmasse ausgenutzt werden kann.

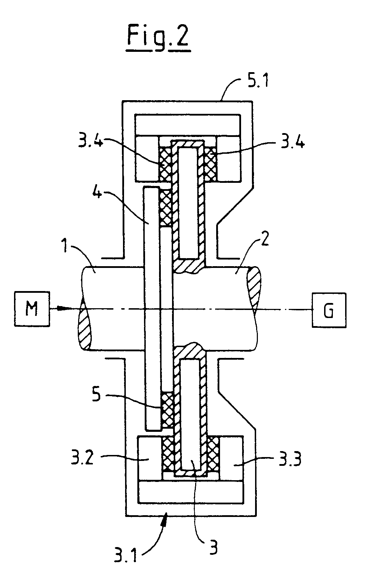

Die Ausführungsform gemäß Figur 2 ist jener gemäß Figur 1 sehr ähnlich. Jedoch ist hierbei die Bremsscheibe 3 auf dem Getriebe-Wellenzapfen 2 angeordnet. Diese Ausführungsform hat den Vorteil, daß die Bremse auch bei ausgekoppeltem Motor wirkt. Im übrigen stellt die Bremsscheibe 3 zugleich die eine der beiden Druckplatten und das Schwungrad 4 des Motors - aufgekeilt auf dem Motor-Wellenstumpf 1 - die andere der beiden Kupplungsscheiben dar. Man erkennt auch hierbei wieder einen Reibbelag 5 zwischen diesen beiden genannten Teilen. Auch hier ist wiederum der Bremsscheibe 3 ein Bremssattel 3.1 mit den beiden Schenkeln 3.2, 3.3 und den Bremsbelägen 3.4 zugeordnet. Auch hierbei ist die Bremsscheibe 3 hohl und durch entsprechende Zufuhr und Abfuhr von Kühlflüssigkeit gekühlt.

## Patentansprüche

1. Antriebsstrang
1.1 mit einem Motor (M);
1.2 mit einem Getriebe (G);
1.3 mit einer Kupplung, die zwei Kupplungsscheiben aufweist, deren eine mit der Motorwelle (1) und deren andere mit der Getriebewelle (2) drehfest verbunden ist;
1.4 in unmittelbarer Nähe der Kupplung ist eine Bremsscheibe (3) angeordnet;
1.5 die eine der beiden Kupplungsscheiben ist aus der Bremsscheibe (3) gebildet.

2. Antriebsstrang nach Anspruch 1, dadurch gekennzeichnet, daß die Bremsscheibe (3) mit der Motorwelle (1) drehfest verbunden ist.

3. Antriebsstrang nach Anspruch 1, dadurch gekennzeichnet, daß die Bremsscheibe (3) mit der Getriebewelle (2) drehfest verbunden ist.

4. Antriebsstrang nach einem der Ansprüche 1 bis 3, dadurch gekennzeichnet, daß der Bremsscheibe (3) ein Bremssattel (3.1) zugeordnet ist, der den Außenumfang der Bremsscheibe (3) umgreift.

5. Antriebsstrang nach einem der Ansprüche 1 bis 4, dadurch gekennzeichnet, daß eine der beiden Kupplungsscheiben als Schwungrad ausgebildet ist.

6. Antriebsstrang nach einem der Ansprüche 1 bis 5, gekennzeichnet durch die folgenden Merkmale:
6.1 die Bremsscheibe (3) ist flüssigkeitsgekühlt;
6.2 die Bremsscheibe (3) weist Zentrifugalkanäle auf, mit denen eine Kühlflüssigkeit radial nach außen geleitet wird;
6.3 die Bremsscheibe (3) weist Zentripetalkanäle auf, mit denen die Kühlflüssigkeit radial nach innen geleitet wird.

7. Antriebsstrang nach einem der Ansprüche 1 bis 6, dadurch gekennzeichnet, daß die Brems-Kupplungs-Einheit zwischen Motor und Getriebe angeordnet ist.

8. Antriebsstrang nach einem der Ansprüche 1 bis 7, dadurch gekennzeichnet, daß der Bremssattel (3.1) ortsfest ist.

9. Antriebsstrang nach einem der Ansprüche 1 bis 7, dadurch gekennzeichnet, daß der Bremssattel (3.1) schwimmend gelagert ist.

10. Antriebsstrang nach einem der Ansprüche 1 bis 9, dadurch gekennzeichnet, daß die Kupplung eine Schaltkupplung ist.

11. Antriebsstrang nach einem der Ansprüche 1 bis 10, dadurch gekennzeichnet, daß zwischen den beiden Kupplungsscheiben ein Reibbelag (5) angeordnet ist.
